# EUROPÄISCHE PATENTANMELDUNG

(11) **EP 2 615 354 A2**
(43) Veröffentlichungstag der Anmeldung: **17.07.2013**
(21) Anmeldenummer: 13150605.7
(22) Anmeldetag: 09.01.2013
(51) Int. Cl.: F16N 31/02

(54) **Ölabstreifvorrichtung**

(30) Priorität: 12.01.2012 DE 102012200374
(71) Anmelder: Aktiebolaget SKF, 41550 Göteborg (SE)
(72) Erfinder: Beck, Jens, 97688 Bad Kissingen (DE)
(74) Vertreter: Schonecke, Mitja

(57) **Zusammenfassung**

Die Erfindung betrifft eine Abstreifvorrichtung (1) zum Abstreifen von überschüssigem Schmiermittel von einem zu schmierenden Förderelement (2), wobei sich das Förderelement (2) entlang einer Längsachse (L) erstreckt und vorzugsweise sich entlang der Längsachse (L) zumindest zeitweise bewegt. Um überschüssiges Schmiermittel gezielt abzustreifen und an geeignetem Ort aufzufangen, umfasst die Vorrichtung einen Auffangbehälter (3) mit einem Auffangraum (4) für Schmiermittel, wobei der Auffangbehälter (3) in einem Abstand (a) seitlich neben dem Förderelement (2) angeordnet ist, sowie einen Abstreifer (5), der eine Ausnehmung (6) zum Durchtritt des Förderelements (2) aufweist, wobei der Abstreifer (5) mindestens eine Förderrinne (7) zum Fördern von Schmiermittel vom Bereich der Ausnehmung (6) bis zu einem Abgabeort (8) im Bereich des Auffangraums (4) aufweist.

## Beschreibung

Die Erfindung betrifft eine Abstreifvorrichtung zum Abstreifen von überschüssigem Schmiermittel von einem zu schmierenden Förderelement, wobei sich das Förderelement entlang einer Längsachse erstreckt und vorzugsweise sich entlang der Längsachse zumindest zeitweise bewegt.

Bei einem Förderelement der genannten Art handelt es sich beispielsweise um ein Seil, insbesondere um ein Drahtseil, mit dem oder durch das eine zu fördernde Last bewegt wird. Für eine dauerhafte Funktion muss in vielen Fällen das Förderelement geschmiert werden. Insbesondere müssen Drahtseile mit Schmierfett oder Schmieröl versehen werden, um ihre Funktion langfristig aufrecht erhalten zu können. Es sind Schmiereinrichtungen bekannt, mit denen die Förderelemente automatisch geschmiert werden können. Allerdings wird hierbei zumeist mehr Schmiermittel (worunter im Rahmen dieser Patentanmeldung gegebenenfalls auch ein Konservierungsmedium zu verstehen ist) als erforderlich auf das Förderelement aufgebracht. Nachteilig ist es in diesem Falle, dass überschüssiges Schmiermittel abtropfen kann, was sowohl unter Umweltschutzgesichtspunkten problematisch ist als auch hinsichtlich der Betriebssicherheit einer Anlage (Rutschgefahr durch Lachen von Schmiermittel).

Eine Abstreifvorrichtung zum Abstreifen von überschüssigem Schmiermittel von einem zu schmierenden Förderelement der eingangs genannten Art ist aus der JP 01223209 A bekannt. Eine solche Vorrichtung wird auch in der DE 280 010 A gezeigt. In der JP 2003 190888 A wird ein Werkzeug zum Reinigen eines Drahtseils beschrieben. Aus der AT 289 485 B geht eine Schmiervorrichtung für ein Zahnradgetriebe im Anfahrzustand hervor. Sofern bei einer Vorrichtung der eingangs genannten Art mit Auffangbehältern für abtropfendes Schmiermittel gearbeitet wird, ist es nachteilig, dass sich im Laufe der Zeit in den Auffangbehältern auch andere Stoffe als das überschüssige Schmiermittel ansammelt, z. B. Regenwasser.

Bei nicht umlaufenden Förderelementen kann es hier dadurch Probleme geben, dass es zu Richtungsumkehrungen im Förderelement kommt. Hier kann evtl. nur ein Teil des überschüssigen Schmiermediums abgefangen werden.

Bekannt ist daher, nach einem Schmiervorgang überschüssiges Schmiermittel manuell (mittels eines Lappens) zu entfernen. Dies allerdings ist mit entsprechenden Instandhaltungsaufwendungen verbunden und somit kostenintensiv. Des Weiteren kann diese Arbeit unter Sicherheitsgesichtspunkten problematisch sein (Arbeitsschutz).

Der Erfindung liegt die Aufgabe zugrunde, eine Abstreifvorrichtung für ein Förderelement vorzuschlagen, mit dem die genannten Nachteile vermieden werden können. Es soll insbesondere überschüssiges Schmiermittel gezielt abgestriffen und zu einem Sammelort geführt werden können. Dies soll in einfacher und kostengünstiger Weise erfolgen. Die Abstreifvorrichtung soll sich dabei insbesondere eignen, um den gewünschten Abstreifeffekt in beiden Relativrichtungen bereitstellen zu können.

Die Lösung dieser Aufgabe durch die Erfindung ist dadurch gekennzeichnet, dass die Abstreifvorrichtung umfasst:
- einen Auffangbehälter mit einem Auffangraum für Schmiermittel, wobei der Auffangbehälter in einem Abstand seitlich neben dem Förderelement angeordnet ist, und
- einen Abstreifer, der eine Ausnehmung zum Durchtritt des Förderelements aufweist, wobei der Abstreifer mindestens eine Förderrinne zum Fördern von Schmiermittel vom Bereich der Ausnehmung bis zu einem Abgabeort im Bereich des Auffangraums aufweist.

Der Abstreifer kann dabei sowohl an einer Oberseite als auch an einer Unterseite mit jeweiligen Förderrinnen versehen sein. Der Abstreifer ist dabei bevorzugt bezüglich einer Mittenebene spiegelsymmetrisch ausgebildet.

Der Abstreifer ist bevorzugt am Auffangbehälter schwenkbar um eine Achse gelagert, die windschief zur Längsachse des Förderelements angeordnet ist; die Achse und die Längsachse sind demnach nicht parallel und schneiden sich nicht. Diese Achse ist bevorzugt horizontal angeordnet. Am Abstreifer - beabstandet von der Achse - und am Auffangbehälter kann mindestens ein Federelement angeordnet sein, das den Abstreifer elastisch in einer Null-Lage hält.

Die Förderrinne weist bevorzugt einen Ringabschnitt auf, der um die Ausnehmung zum Durchtritt des Förderelements ringförmig umläuft. Hierbei ist bevorzugt eine konzentrische Ausbildung des Ringabschnitts zum Förderelement vorgesehen. An den Ringabschnitt kann sich ein Linearabschnitt anschließen, der sich entlang einer Längsrichtung des Abstreifers erstreckt. Der Linearabschnitt kann in einer Abtropfbohrung enden, die den Abstreifer senkrecht zur Längsrichtung und bevorzugt vertikal durchsetzt.

Die Längsachse des Förderelements verläuft bevorzugt in vertikale Richtung.

Das Förderelement ist bevorzugt ein Seil, insbesondere ein Drahtseil.

Die Ausnehmung im Abstreifer ist bevorzugt als Langloch ausgebildet, das der Querschnittsgeometrie des Förderelements angepasst ist. Der Abstreifer umschließt somit mit etwas Spiel das abzustreifende Element. Der Abstreifer besteht, zumindest im Bereich, mit dem es das Förderelement umschließt, bevorzugt aus Kunststoff oder Gummi; aber auch eine Herstellung aus Metall oder aus anderen Materialien ist möglich.

Das Fördermittel ist zumeist ein Seil, insbesondere ein Drahtseil. Allerdings kann die vorgeschlagene Lösung auch für andere Anwendungen eingesetzt werden, z. B. für Flach- und Rundfiihrungen, gegebenenfalls auch für Förderketten.

Typische Anwendungsfälle sind Aufzüge, insbesondere von Schiffshebewerken oder Hochregallagern.

Bevorzugt wird die vorgeschlagene Abstreifvorrichtung in der Nähe von Nachschmiereinrichtungen angeordnet. Es ist in diesem Zusammenhang auch möglich, dass die vorgeschlagene Abstreifvorrichtung mit einer beweglichen Nachschmiereinrichtung mitfahrbar angeordnet wird.

Durch die Bewegung des Förderelements relativ zum Abstreifer wird das überschüssige Schmiermittel abgestriffen und fließt über die Förderrinne - einmal aufgrund von Kapillareffekten, einmal aufgrund der Schwerkraft - zum Auffangbehälter und dort in den Auffangraum.

Der mit einem Deckel verschließbare Auffangbehälter ist vor dem Eindringen von Regenwasser geschützt; dasselbe gilt für andere unerwünschte Umgebungsmedien.

Die Förderrinne (Nut) auf der Oberseite und auf der Unterseite des Abstreifers ist bevorzugt gleich ausgebildet und leitet das Schmiermittel in den Auffangbehälter, und zwar bei einer Relativbewegung zwischen dem Förderelement und dem Abstreifer in beiden Richtungen.

Die Eignung zum Abstreifen in beiden Relativrichtungen wird durch das erwähnte Federelement gewährleistet. Hierdurch gelangt der Abstreifer relativ zum Förderelement dann, wenn keine Relativbewegung vorliegt, in eine Null-Lage bzw. Ausgangsposition. Dies erleichtert das Fördern des Schmiermittels vom Bereich der Ausnehmung in den Auffangraum. Das Federelement ist dabei so ausgewählt, dass sich ein Gleichgewichtszustand zwischen Gewichtskraft des Abstreifers und Federkraft ergibt, wenn keine Relativbewegung stattfindet.

Ist der Auffangbehälter mit abgestriffenem Schmiermittel gefiillt, kann er mittels einer Schraubverbindung leicht gelöst und entleert werden. Durch Überlauföffnungen oder Anschlussöffnungen kann das Schmiermittel auch weiter (wie bei Rücklaufleitungen in Ölumlaufanlagen) in andere Auffang- oder Aufbereitungsbehälter geleitet werden.

Es ist eine Füllstandskontrolle im Auffangbehälter durch einen Schwimmer mit Schalter möglich. Demgemäß wird in diesem Falle dann mittels eines Schwimmerschalters der Füllstand im Auffangbehälter detektiert.

Bevorzugt, aber nicht ausschließlich, eignet sich das vorgeschlagene System für senkrecht angeordnete Förderelemente, insbesondere Seile oder Führungsstangen, die sich bevorzugt in beide relative Bewegungsrichtungen zur Abstreifvorrichtung bewegen.

Die Herstellkosten für das vorgeschlagene System sind gering. Es kann weitgehend mit handelsüblichen Teilen gearbeitet werden (Schmierstoffsammler). Auch die Installation gestaltet sich einfach und somit kostengünstig. Es ist keine aufwändige Steuerung nötig, allenfalls eine Füllstandskontrolle im Auffangbehälter. Der Platzbedarf der Vorrichtung ist gering. Auch sind die benötigten Teile nur geringem Verschleiß ausgesetzt.

Eine Anpassung der Vorrichtung auf ein konkret zu bedienendes Förderelement ist problemlos: Es kann eine Anpassung z. B. für Seile, Ketten und Flach- bzw. Rundfiihrungen einfach realisiert werden. Hierfür wird lediglich die Ausnehmung im Abstreifer entsprechend angepasst.

Somit wird ein gezieltes Sammeln von überschüssigem Schmiermittel in einfacher Weise ermöglicht. Die Umweltbelastung durch frei werdendes Schmiermittel wird hierdurch vermindert. Gleichermaßen wird die Unfallgefahr reduziert.

Obwohl im Zusammenhang mit der vorliegenden Erfindung generell von Schmiermittel die Rede ist, sei bemerkt, dass es sich hierbei natürlich auch um ein anderes Medium ähnlicher Viskosität handeln kann, z. B. um ein Korrosionsschutzmittel etc.

In der Zeichnung ist ein Ausführungsbeispiel der Erfindung dargestellt. Es zeigen:
- Fig. 1: schematisch in der Seitenansicht ein vertikal verlaufendes Förderelement in Form eines Seils, an dem eine Abstreifvorrichtung gemäß einer Ausfiihrungsform der Erfindung angreift, wobei eine Ausgangs- oder Null-Lage dargestellt ist,
- Fig. 2: in der Darstellung nach Fig. 1 die Anordnung beim Abstreifen von überschüssigem Schmiermittel vom Seil, wobei sich das Seil relativ zur Abstreifvorrichtung nach oben bewegt,
- Fig. 3: die Draufsicht auf den Abstreifer der Abstreifvorrichtung und
- Fig. 4: den Schnitt C-D gemäß Fig. 3.

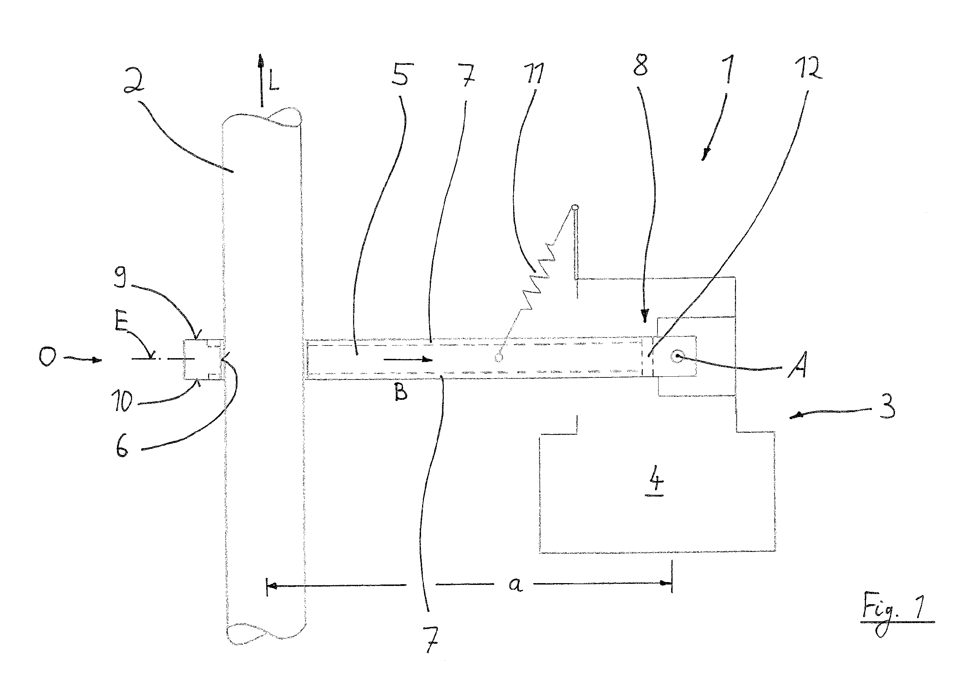

In Fig. 1 ist eine Abstreifvorrichtung 1 zu sehen, mit der überschüssiges Schmiermittel abgestriffen und gesammelt werden soll, das sich auf einem Förderelement 2 in Form eines Seils (Drahtseils) befindet. Das Seil 2 erstreckt sich in Richtung einer Längsachse L, die vorliegend vertikal angeordnet ist.

Zentrales Bauteil der Abstreifvorrichtung 1 ist ein Auffangbehälter 3 mit einem Auffangraum 4, der sich seitlich neben dem Seil 2 in einem Abstand a befindet. Weiteres zentrales Bauteil der Abstreifvorrichtung 1 ist ein Abstreifer 5, der das Seil 2 umgreift und überschüssiges Schmiermittel in den Aufnahmeraum 4 leitet.

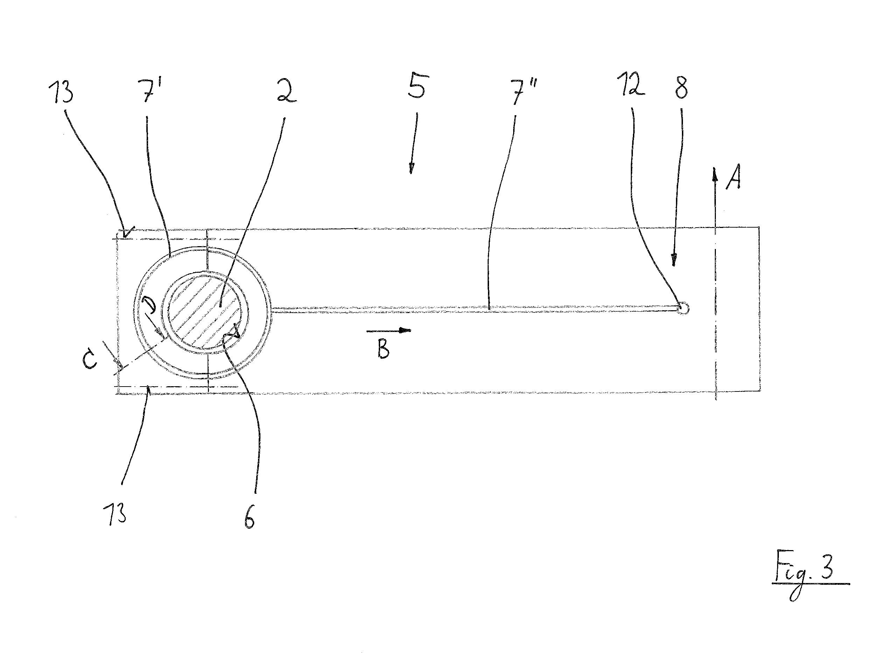

Wie in der Zusammenschau mit Fig. 3 zu erkennen ist, weist der Abstreifer 5 in seinem einen Endbereich eine Ausnehmung 6 auf, die mit Spiel das Seil 2 umgreift. Zur Montage ist der Abstreifer 5 zweiteilig ausgebildet, wobei die beiden Teile mit nur angedeuteten Schrauben 13 miteinander verbunden sind.

Der Abstreifer 5 ist um eine Achse A schwenkbar im Auffangbehälter 3 gelagert. Diese Achse A ist vorliegend horizontal angeordnet und windschief zur Längsachse L.

Wenn sich das Seil 2 relativ zur Abstreifvorrichtung 1 nicht bewegt, wird der Abstreifer 5 in einer Null-Lage O gehalten, wie es in Fig. 1 dargestellt ist. Hierzu greift ein Federelement 11 sowohl am Abstreifer 5 (in einem Abstand zur Achse A) als auch am Auffangbehälter 3 an.

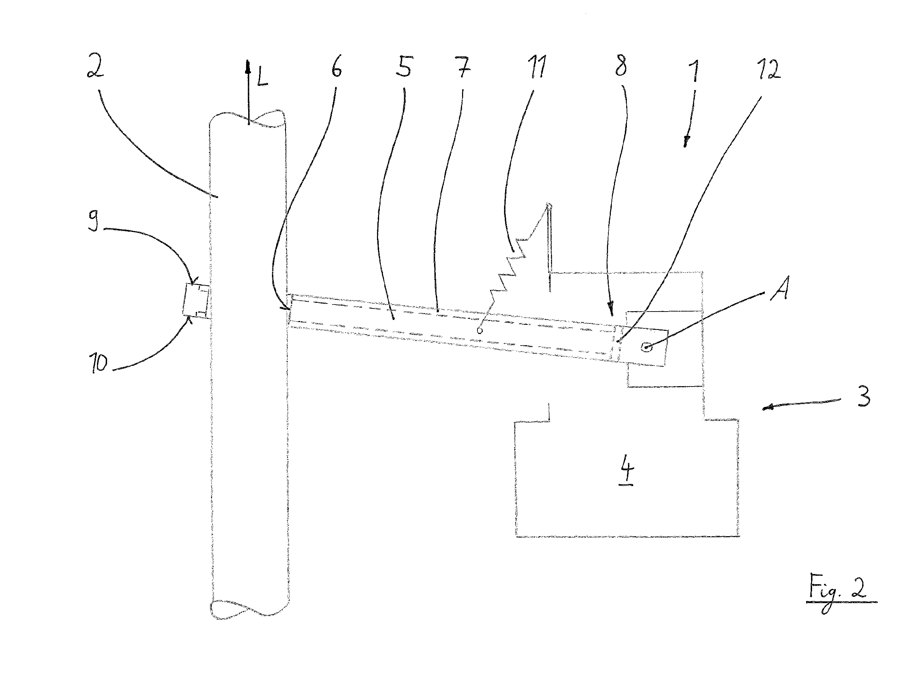

Bewegt sich das Seil 2 indes relativ zur Abstreifvorrichtung 1 wird der Abstreifer 5 infolge der Reibung mitgenommen, so dass sich die in Fig. 2 dargestellte Lage einstellt, wenn - wie hier - das Seil 2 relativ zur Abstreifvorrichtung 1 nach oben fährt.

Für die maximalen Schwenkwinkel des Abstreifers 5 nach oben und nach unten können (nicht dargestellte) Anschläge vorgesehen werden.

Abgestriffenes Schmiermittel lagert sich um die Ausnehmung 6 herum auf der Oberseite 9 oder auf der Unterseite 10 (wie im Falle der Situation gemäß Fig. 2) des Abstreifers 5 ab und muss in den Auffangraum 4 gelangen. Hierzu weist der sich in eine Längsrichtung B erstreckende Abstreifer 5 eine Förderrinne 7 auf, d. h. genauer gesagt je eine Förderrinne 7 auf der Oberseite 9 und auf der Unterseite 10.

Die Ausgestaltung der Förderrinne 7 ist spiegelsymmetrisch zu einer Mittenebene E des Abstreifers 7.

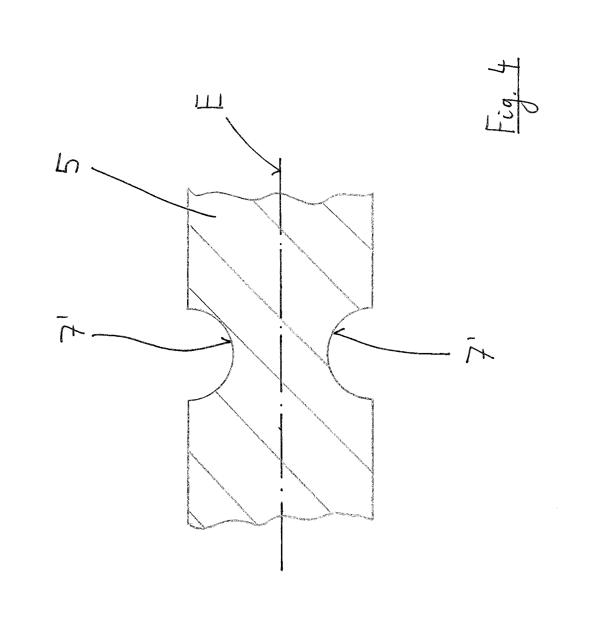

Die Förderrinne 7 hat zunächst im Bereich der Ausnehmung 6 einen Ringabschnitt 7', der sich konzentrisch um die Ausnehmung 6 herum erstreckt (s. Fig. 3). Die Ausformung der Förderrinne 7 und insbesondere des Ringabschnitts 7' ist aus der Schnittdarstellung gemäß Fig. 4 ersichtlich. Fluidisch verbunden mit dem Ringabschnitt 7' ist ein Linearabschnitt 7" der sich in Längsrichtung B des Abstreifers 5 erstreckt, und zwar bis zu einer Abtropfbohrung 12, die an einem Abgabeort 8 angeordnet ist.

Hier tropft das vom Ringabschnitt 7' über den Linearabschnitt 7" geförderte Schmiermittel in den Auffangraum 4.

Es sei auch noch auf folgende mögliche Weiterbildung des erfindungsgemäßen Gedanken hingewiesen: Möglich ist es, dass die Schwenkbewegung des Abstreifers 5 um die Achse A genutzt wird, um eine am oder im Auffangbehälter 3 angeordnete Pumpe (z. B. Kolbenpumpe) zu betätigen. Die Pumpe kann dann Schmiermittel, das sich im Auffangbehälter befindet, auf oder an das zu schmierende bzw. zu benetzende Förderelement 2 pumpen. Somit könnte eine Nachschmierfunktionalität realisiert werden.

Die Pumpe wird dabei mit Abstand zur Achse A am Abstreifer 5 angelenkt, um die Bewegung des Abstreifens für einen Pumpeffekt zu nutzen.

### Bezugszeichenliste

- 1: Abstreifvorrichtung
- 2: Förderelement (Seil)
- 3: Auffangbehälter
- 4: Auffangraum
- 5: Abstreifer
- 6: Ausnehmung
- 7: Förderrinne
- 7': Ringabschnitt
- 7'': Linearabschnitt
- 8: Abgabeort
- 9: Oberseite
- 10: Unterseite
- 11: Federelement
- 12: Abtropfbohrung
- 13: Schraube

- L: Längsachse
- E: Mittenebene
- A: Achse
- B: Längsrichtung des Abstreifers
- O: Null-Lage
- a: Abstand

## Patentansprüche

1. Abstreifvorrichtung (1) zum Abstreifen von überschüssigem Schmiermittel von einem zu schmierenden oder zu benetzenden Förderelement (2), wobei sich das Förderelement (2) entlang einer Längsachse (L) erstreckt, umfassend:
- einen Auffangbehälter (3) mit einem Auffangraum (4) für Schmiermittel, wobei der Auffangbehälter (3) in einem Abstand (a) seitlich neben dem Förderelement (2) angeordnet ist, und
- einen Abstreifer (5), der eine Ausnehmung (6) zum Durchtritt des Förderelements (2) aufweist, wobei der Abstreifer (5) mindestens eine Förderrinne (7) zum Fördern von Schmiermittel vom Bereich der Ausnehmung (6) bis zu einem Abgabeort (8) im Bereich des Auffangraums (4) aufweist.

2. Abstreifvorrichtung nach Anspruch 1, **dadurch gekennzeichnet, dass** der Abstreifer (5) sowohl an einer Oberseite (9) als auch an einer Unterseite (10) mit jeweiligen Förderrinnen (7) versehen ist.

3. Abstreifvorrichtung nach Anspruch 2, **dadurch gekennzeichnet, dass** der Abstreifer (5) bezüglich einer Mittenebene (E) spiegelsymmetrisch ausgebildet ist.

4. Abstreifvorrichtung nach einem der Ansprüche 1 bis 3, **dadurch gekennzeichnet, dass** der Abstreifer (5) am Auffangbehälter (3) schwenkbar um eine Achse (A) gelagert ist, die windschief zur Längsachse (L) des Förderelements (2) angeordnet ist.

5. Abstreifvorrichtung nach Anspruch 4, **dadurch gekennzeichnet, dass** am Abstreifer (5), beabstandet von der Achse (A) und am Auffangbehälter (3) mindestens ein Federelement (11) angeordnet ist, das den Abstreifer (5) elastisch in einer Null-Lage (O) hält.

6. Abstreifvorrichtung nach einem der Ansprüche 1 bis 5, **dadurch gekennzeichnet, dass** die Förderrinne (7) einen Ringabschnitt (7') aufweist, der um die Ausnehmung (6) zum Durchtritt des Förderelements (2) ringförmig umläuft.

7. Abstreifvorrichtung nach Anspruch 6, **dadurch gekennzeichnet, dass** sich an den Ringabschnitt (7`) ein Linearabschnitt (7") anschließt, der sich entlang einer Längsrichtung (B) des Abstreifers (5) erstreckt.

8. Abstreifvorrichtung nach Anspruch 7, **dadurch gekennzeichnet, dass** der Linearabschnitt (7") in einer Abtropfbohrung (12) endet, die den Abstreifer (5) senkrecht zur Längsrichtung (B) durchsetzt.

9. Abstreifvorrichtung nach einem der Ansprüche 1 bis 8, **dadurch gekennzeichnet, dass** die Längsachse (L) des Förderelements (2) in vertikale Richtung verläuft.

10. Abstreifvorrichtung nach einem der Ansprüche 1 bis 9, **dadurch gekennzeichnet, dass** das Förderelement (2) ein Seil, insbesondere ein Drahtseil, ist.
